**Europäisches Patentamt**

**European Patent Office**

**Office européen des brevets**

(19)

(11) Veröffentlichungsnummer: **0 241 670**
**A1**

(12) ## EUROPÄISCHE PATENTANMELDUNG

(21) Anmeldenummer: **87102172.1**

(22) Anmeldetag: **16.02.87**

(51) Int. Cl.⁴: **C 23 G 3/00,** C 23 G 5/00,
B 08 B 7/00

(30) Priorität: **12.03.86 DE 3608177**

(43) Veröffentlichungstag der Anmeldung: **21.10.87**
**Patentblatt 87/43**

(84) Benannte Vertragsstaaten: **AT BE CH DE ES FR GB IT LI
LU NL SE**

(71) Anmelder: **Firma Dr. Böing GmbH & Co. Anlagen und
Maschinen KG, Tiegelstrasse 6, D-5800 Hagen-Halden
(DE)**

(72) Erfinder: **Utz, Richard, Ing., Bergwald 27,
D-7505 Ettlingen-Weier (DE)**
Erfinder: **Krieg, Ewald, Ing., Schwarzwaldring 46,
D-7505 Ettlingen-Schöllbronn (DE)**

(74) Vertreter: **Zapfe, Hans, Dipl.-Ing.,
Seestrasse 2 Postfach 30 04 08, D-6054 Rodgau-3 (DE)**

(54) **Verfahren und Vorrichtung zum Entfernen von schwer verdampfbaren Kohlenwasserstoffen aus feinstückigem Gut.**

(57) Verfahren und Vorrichtung zum Entfernen von schwer verdampfbaren Kohlenwasserstoffen aus feinstückigem Gut, insbesondere zum Reinigen von Schneidöl enthaltenden Metallspänen. Das Gut wird über eine mit Schutzgas versorgte Eintragsvorrichtung (8) in eine Retorte eingetragen und durchläuft diese kontinuierlich und unter Sauerstoffabschluß bis zu einer gleichfalls mit Schutzgas versorgten Austragsvorrichtung. Um hierbei eine Explosionsgefahr zu beseitigen und die Wirtschaftlichkeit des Verfahrens zu vergrößern, wird das Gut sowohl in der Eintragsvorrichtung (8) als auch in der Austragsvorrichtung in einem Rohr (9) durch einen intermittierend wirkenden Stempel (13) in axialer Richtung zu einem gasdurchlässigen, das Rohr (9) weitgehend ausfüllenden Pfropfen (15) verdichtet. Der Pfropfen (15) wird nach Verlassen des Rohres (9) und vor dem Eintritt des Gutes in die Retorte wieder in einen fließfähigen Stoffstrom umgewandelt. Durch eine spezielle Aufteilung der Schutzgasströmung in dem Rohr wird dafür Sorge getragen, daß weder Sauerstoff in die Retorte eindringen noch allzu viel Schutzgas an die Atmosphäre entweichen kann.

Firma
Dr. Böing GmbH & Co.
Anlagen und Maschinen KG
Tiegelstraße 6

D-5800 Hagen - Halden

-----------------------------------------------------------------

" Verfahren und Vorrichtung zum Entfernen
von schwer verdampfbaren Kohlenwasserstoffen aus feinstückigem Gut "

-----------------------------------------------------------------

Die Erfindung betrifft ein Verfahren zum Entfernen von schwer verdampfbaren Kohlenwasserstoffen aus feinstückigem Gut, insbesondere zum Reinigen von Schneidöl enthaltenden Metallspänen durch indirekte Erwärmung des Gutes unter Sauerstoffabschluß in einer vom Gut kontinuierlich durchlaufenen Retorte, in die das Gut durch eine mit Schutzgas versorgte Eintragsvorrichtung eingebracht und aus der es durch eine mit Schutzgas versorgte Austragsvorrichtung wieder ausgebracht wird.

- 2 -

Die Erfindung betrifft außerdem eine Vorrichtung zur Durchführung eines solchen Verfahrens mit einer von außen beheizbaren Retorte, der in jeweils gasdichter Verbindung eine Eintragsvorrichtung vorgeschaltet und eine Austragsvorrichtung nachgeschaltet ist und die eine Fördereinrichtung für den kontinuierlichen Transport des Guts von der Eintrags- zur Austragsvorrichtung aufweist.

Ein derartiges Verfahren und eine entsprechende Vorrichtung sind durch die DE-OS 33 15 557 der gleichen Anmelderin bekannt. Im Prinzip geht es darum, das feinstückige Gut, vornehmlich Metallspäne aus höherwertigen Legierungen wie beispielsweise Messing, zurückzugewinnen, ohne einerseits unerwünschte Rückstände der Kohlenwasserstoffe auf dem Gut zu erhalten und andererseits die Umwelt durch die Kohlenwasserstoffe selbst oder deren unvollständige Verbrennungsprodukte (Ruß) zu belasten. Es ist darüber hinaus auch noch erwünscht, die in den Kohlenwasserstoffen enthaltene chemische Energie sowie die in den Abgasen enthaltene Abwärme durch Verbrennung bzw. Wärmerückgewinnung als Prozeßwärme für das Aufheizen des Guts sowie für das Verdampfen der Kohlenwasserstoffe zu verwenden. Speziell mit dem zuletzt genannten Problem befaßt sich die DE-OS 33 15 557.

- 3 -

Bei den schwer verdampfbaren Kohlenwasserstoffen handelt es sich im allgemeinen um aus verschiedenen Fraktionen bestehende Öle, wobei Schneidöle in der Regel auch noch Zusätze aus Fetten und/oder Emulgatoren aufweisen, da Schneidöle einen Wasseranteil aufweisen. Üblicherweise haben Metallspäne, die von Zerspanungsprozessen angeliefert werden, einen Schneidölanteil von etwa 4 %, der zu etwa 3,9 % aus Kohlenwasserstoff und zu etwa 0,1 % aus Wasser besteht. Die Befreiung der Metallspäne von Schneidöl hat seit jeher Probleme aufgeworfen, insbesondere dann, wenn umweltbelastende chemische Mittel verwendet wurden.

Es ist zwar bekannt, die in Bildung begriffenen Kohlenwasserstoffdämpfe über den Metallspänen zu verbrennen, was jedoch zu der weiter oben beschriebenen Rückstandsbildung auf den Spänen und zu einer beträchtlichen Umweltbelastung führt, die nur durch aufwendige Filterungsmaßnahmen gemindert werden kann. Ein solches Verfahren ist nicht Ziel und Zweck der Erfindung.

Die Erfindung strebt vielmehr die rückstandsfreie Destillation der Kohlenwasserstoffe zusammen mit etwaigen Begleitstoffen wie z.B. Wasser, an, wobei nachfolgend, d.h. in Abwesenheit der Metallspäne, eine Verbrennung unter genau kontrollierbaren Bedingungen erfolgen kann, um beispielsweise mindestens einen Teil der Prozeßwärme zu gewinnen. Dies setzt das Erreichen oder Überschreiten der Destillations-

- 4 -

temperaturen aller Fraktionen voraus, wobei die am höchsten siedende Fraktion für die Bestimmung der Temperatur maßgebend ist. Eine solche Prozeßführung ist aber im großtechnischen Maßstab nur schwer durchführbar, weil hierbei unter allen Umständen die Bildung explosiver oder zur Verpuffung neigender Dampf- und Gasgemische vermieden werden muß. Aus diesem Grunde wird auch in der DE-OS 33 15 557 vorgeschrieben, daß der Reinigungsprozeß in Abwesenheit von Sauerstoff durchzuführen ist. Die bekannte Vorrichtung besitzt zu diesem Zweck mit Inertgas beschickbare Schleusen auf der Eintrags- und Austragsseite der Retorte. Zu diesen Schleusen gehören - jeweils in doppelter Anordnung - Schleusenventile, Bunker und Förderschnecken, durch die der Partikelstrom in die Retorte eingetragen und aus ihr wieder ausgetragen wird. Der vollständige Abschluß des Sauerstoffs ist mit derartigen Einrichtungen jedoch problematisch, zumindest verbrauchen die Schleuseneinrichtungen große Mengen an Inertgasen zur Spülung des auf der Eintragsseite eingebrachten Gutes bzw. zum Austreiben des mitgeführten Sauerstoffs. Man hat es daher aus Sicherheitsgründen vorgezogen, die Betriebstemperatur deutlich unterhalb der niedrigsten Entzündungstemperatur der vorkommenden Kohlenwasserstoffe zu halten, d.h. bei maximal etwa 250 C.

Durch eine solche Maßnahme wird jedoch bei gleichem Durchsatz eine wesentlich größere Vorrichtung mit einem deutlich höheren Energiebedarf absolut und pro Tonne Einsatzgut benötigt. Legt man die Vorrichtung für eine Betriebstemperatur von 400 C aus, betreibt sie aber aus Sicherheitsgründen nur bis maximal 270 C, so ergibt sich eine Minderung von Durchsatz und Wirkungsgrad von etwa 50 %. Bei der dadurch bedingten Kostenkonstellation wird das Interesse an einer Wiederaufarbeitung zahlreicher Einsatzgüter denkbar verringert.

Der Erfindung liegt daher die Aufgabe zugrunde, ein Verfahren und eine Vorrichtung der eingangs beschriebenen Gattung anzugeben, bei denen das erforderliche Maß an Sicherheit gegeben ist und die eine wirtschaftlichere Rückgewinnung zahlreicher Einsatzgüter ermöglichen.

Die Lösung der gestellten Aufgabe erfolgt bei dem eingangs beschriebenen Verfahren erfindungsgemäß dadurch, daß das Gut in der Eintragsvorrichtung in einem Rohr durch einen intermittierend wirkenden Stempel in axialer Richtung zu einem gasdurchlässigen, das Rohr weitgehend ausfüllenden Pfropfen verdichtet wird und daß der Pfropfen nach Verlassen des Rohres und vor dem Eintritt des Guts in die Retorte wieder in einen fließfähigen Stoffstrom umgewandelt wird.

Durch den quasi-kontinuierlichen Austrag kleiner Mengen von trockenen Spänen ist die Staubentwicklung wesentlich geringer als bei den bekannten Verfahren mit großvolumigen umschaltbaren Schleusen.

- 6 -

Mit dem erfindungsgemäßen Verfahren gelingt es, die sich diametral entgegenstehenden Forderungen nach einer außerordentlich hohen Sicherheit einerseits und nach großer Wirtschaftlichkeit andererseits miteinander zu vereinen.

Die mechanische Verdichtung des Guts, bei Metallspänen in der Regel von bereits gebrochenen Spänen, führt zu einem relativ kompakten, gerade eben ausreichend formstabilen Preßkörper unter gleichzeitiger Verdrängung von Luft aus der Eintragsvorrichtung. Durch den Verdichtungsvorgang wird nicht nur der Volumensanteil der im Gut eingeschlossenen Luft drastisch verringert, sondern auch die Menge des benötigten Schutzgases kann erheblich verringert werden. Schutzgas wird nur noch in einer solchen Menge benötigt, daß die in dem Rohr bzw. in dem Pfropfen noch vorhandenen Resthohlräume von einer solchen Menge an Schutzgas in der richtigen Richtung (siehe weiter unten) durchspült werden, daß ein Sauerstoffeinbruch wirksam verhindert wird.

In diesem Zusammenhang ist folgendes von Bedeutung: Es wurden natürlich Überlegungen angestellt, für den Schüttguttransport herkömmliche Schleusen mit quer zum Stoffstrom betätigbaren Ventilschiebern zu verwenden. Diese Ventilschieber sind jedoch bei den meisten in Frage kommenden Stoffen einem hohen Verschleiß ausgesetzt. Speziell beim Reinigen von Metallspänen ist es

- 7 -

jedoch in den meisten Fällen gar nicht möglich, die Ventile überhaupt zu schliessen, weil sich Späne bzw. Spanlocken aus zähen Werkstoffen in den Ventilquerschnitten festsetzen können, so daß Späne zwischen dem Ventilsitz und dem Ventilschieber eingeklemmt werden und das Ventil unbrauchbar machen. Außerdem wird hierbei wegen der großen Menge der in die Eintragsvorrichtung mitgerissenen Luft auch eine große Menge an Spülgas benötigt, um den Luftsauerstoff soweit wie irgend möglich herauszuspülen.

Die erfindungsgemäße, vorübergehende Bildung eines Pfropfens, der bei Spänen auch als sogenannte "Spänesäule" bezeichnet werden kann, schafft hier die Lösung des Problems. Auch hierbei mußte der Fachmann zunächst voneinander diametral entgegenstehenden Problemen ausgehen. Einerseits war natürlich die Beschickung der Retorte mit schüttfähigem bzw. fließfähigem Material außerordentlich erwünscht, weil hierfür bereits erprobte Fördereinrichtungen für den kontinuierlichen Transport des Guts von der Eintrags- zur Austragsvorrichtung zur Verfügung stehen, beispielsweise in Form einer hohlen Schnecke, die einfach mit der Innenwand der Retorte fest verbunden ist, so daß die Drehung der Retorte die erwünschte kontinuierliche Förderung bewirkt. Der Transport des Guts in Form einer lockeren Schüttung durch die Retorte ist auch deswegen erwünscht, weil hierdurch ein besserer Wärmeübergang von der Retortenwand auf die einzelnen

- 8 -

Partikel und ein besseres Abdampfen an der Oberfläche der Schüttung möglich sind. Die Partikel
können hierbei nämlich frei zirkulieren und erreichen mit statistischer Wahrscheinlichkeit sowohl
die Retortenwand als auch die freie Oberfläche
der Schüttung.

Zur Erfindung gehört mithin auch die nachträgliche
Wiederauflösung des Pfropfens durch Maßnahmen und
Mittel, die weiter unten noch näher erläutert
werden.

Es ist dabei besonders vorteilhaft, auch auf der
Austragsseite analoge Maßnahmen zu ergreifen, die
im Kennzeichen des Anspruchs 2 angegeben sind.

Weiterhin ist es besonders vorteilhaft, wenn das Rohr
der Eintragsvorrichtung an einer solchen Stelle mit
Schutzgas versorgt wird, daß der Weg eines Teilstroms
des Schutzgases bis zur Eintrittsseite des Rohres
50 bis 75 % und der Weg des anderen Teilstroms des Schutzgases bis zur Austrittsseite des
Rohres 25 bis 50 % der Gesamtlänge des Rohres
beträgt.

Hierbei spielt die Überlegung eine Rolle, daß der Betriebsdruck in der Retorte durch Schutzgaszufuhr geringfügig
über dem Atmosphärendruck gehalten werden muß. Die Schutzgaszufuhr in die Rohre der Ein- und Austragsvorrichtung
sollte zweckmäßig unter einem weiteren Überdruck gegenüber dem Betriebsdruck in der Retorte erfolgen, so daß
sich Druckdifferenzen zur Retorte hin einerseits und zur
Atmosphäre hin andererseits ausbilden.. Würde man die Schutzgaseinmündung in die unmittelbare Nähe der Eintrittsöffnung verlegen, so wäre eine ausreichende Spülung in Frage gestellt, und unnötig viel Schutzgas würde an die Atmosphäre entweichen. Würde man die Einmündung des Schutzgases in die Nähe der Austrittsseite des Rohres, d.h. zur Retorte hin, verlagern, so wäre hier der Weg des geringsten Widerstandes zu finden, und die Retortenatmosphäre würde mit unnötig viel Schutzgas verdünnt, wodurch die Wiederverwendung der Retortenatmosphäre als Brenngas beeinträchtigt würde. Auch wäre kein ausreichendes Schutzgaspolster als Barriere in der Spänesäule gegenüber dem Retortengas vorhanden (Gasdurchbruch).

Es ist dabei besonders vorteilhaft, wenn das Schutzgas vor der Einführung in die Austragsvorrichtung auf mindestens 200 C, vorzugsweise auf mindestens 400 C, vorgewärmt wird. Hierdurch wird die Bildung von kondensiertem Pyrolysegas in dem Rohr wirksam verhindert.

- 10 -

Die Lösung der gestellten Aufgabe erfolgt bei der eingangs beschriebenen Vorrichtung erfindungsgemäß dadurch, daß die Eintragsvorrichtung ein Rohr mit einer Eintrittsöffnung und einer Austrittsöffnung aufweist, daß im Bereich der Eintrittsöffnung ein in Achsrichtung des Rohres intermitterend bewegbarer Stempel angeordnet ist, derart, daß er in seiner Endstellung die Eintrittsöffnung freigibt und bei seinem Eintauchen in das Rohr in diesem einen Pfropfen aus dem Gut erzeugt, und daß im Bereich der Austrittsöffnung ein in Richtung der Rohrachse verschiebbares Widerlager für den Pfropfen angeordnet ist, das in seiner einen Endstellung in der Nähe der Austrittsöffnung während des Verdichtungshubes des Stempels stillsetzbar ist und das außerhalb dieser Endstellung eine Zerkleinerungsvorrichtung für den Pfropfen darstellt.

Auch auf der Seite der Austragsvorrichtung werden mit besonderem Vorteil analoge Mittel angewandt, wodurch der Bedarf an unterschiedlichen Konstruktionsteilen erheblich verringert wird.

Es ist dabei weiterhin von Vorteil, wenn die Eintrittsöffnung der Rohre an je einen Einlauftrichter ange-

- 11 -

schlossen ist und wenn der Stempel mit seiner Arbeitsfläche in den erweiterten Teil des Einlauftrichters
zurückziehbar ist.

Durch diese Maßnahme erhält der Stempel die zusätzliche
Funktion einer Dosiervorrichtung, d.h. durch ihn
kann die Menge der vom Einlauftrichter in das Rohr
nachrutschenden Menge des Gutes und damit der Verdichtungsvorgang selbst innerhalb ausreichend enger
Grenzen festgelegt werden.

Es ist dabei weiterhin von Vorteil, wenn das Widerlager für den Pfropfen als antreibbarer Drehteller
ausgebildet ist, dessen Drehachse
parallel    zur Rohrachse verläuft, wobei der Rohrquerschnitt in der Projektionsfläche des Drehtellers
liegt. Wenn hierbei noch der Drehteller auf seiner
der Austrittsöffnung des Rohres zugekehrten Oberfläche Zerkleinerungselemente (beispielsweise in
Form radialer Rippen) für die Auflösung des Pfropfens
aufweist, dann kann eben dieses Widerlager abwechselnd
die Rolle des Rohrverschlusses und die Rolle einer
Zerkleinerungseinrichtung für den Pfropfen bzw.
die Spänesäule übernehmen.

Dabei wird ganz besonders zweckmäßig so vorgegangen,
daß das Widerlager zum Zwecke der abschnittweisen Auflösung des aus dem Rohr herausragenden Teils des
Pfropfens während der Drehbewegung aus seiner Tiefststellung

- 12 -

kontinuierlich gegen die Austrittsöffnung und damit gegen den Pfropfen verschiebbar ist, so daß dieser praktisch von seiner Stirnseite her in einzelne Partikel zerrieben wird.

Weitere vorteilhafte Ausgestaltungen des Erfindungsgegenstandes ergeben sich aus den übrigen Unteransprüchen.

Ein Ausführungsbeispiel des Erfindungsgegenstandes wird nachfolgend anhand der Figuren 1 bis 4 näher erläutert.

Es zeigen:

Figur 1   einen Vertikalschnitt durch die Eintragsvorrichtung und die Eintragsseite der Retorte,

Figur 2   einen Vertikalschnitt durch die Austragsvorrichtung und die Austragsseite der Retorte,

Figur 3   einen Vertikalschnitt durch die Eintragsvorrichtung nach Figur 1, jedoch mit deutlicherer Darstellung einiger Details und

Figur 4   das Ende des Abzugsrohres mit zwei Gruppen von Rückschlagventilen.

- 13 -

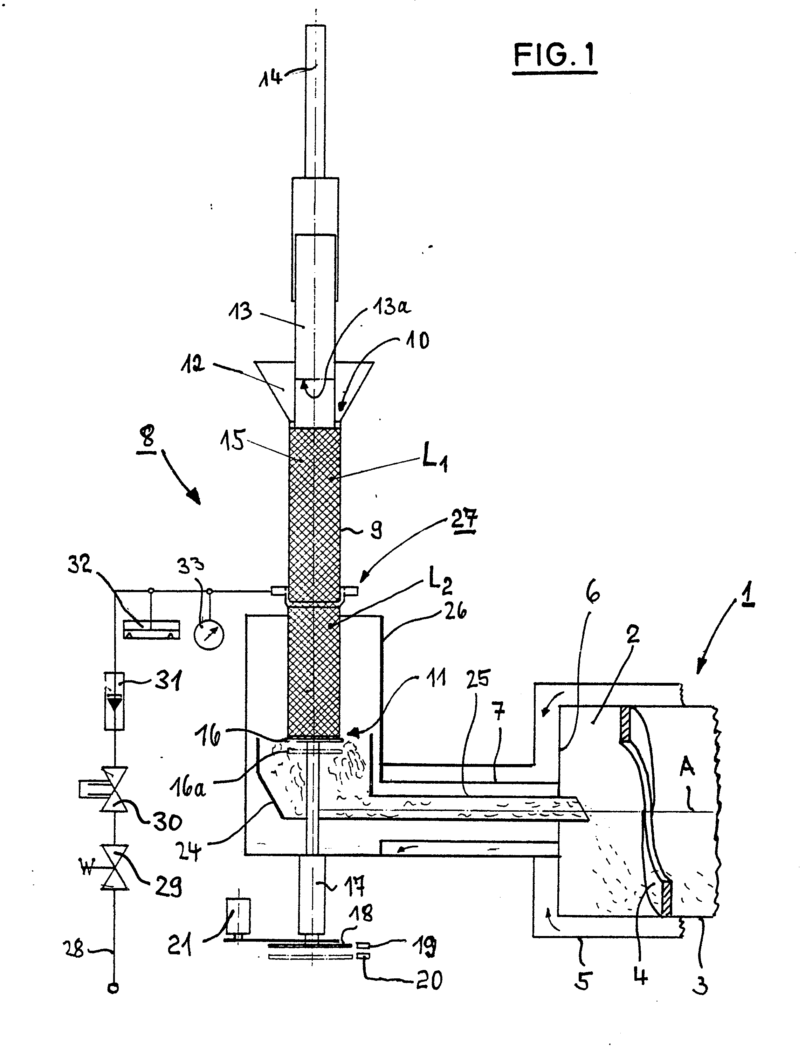

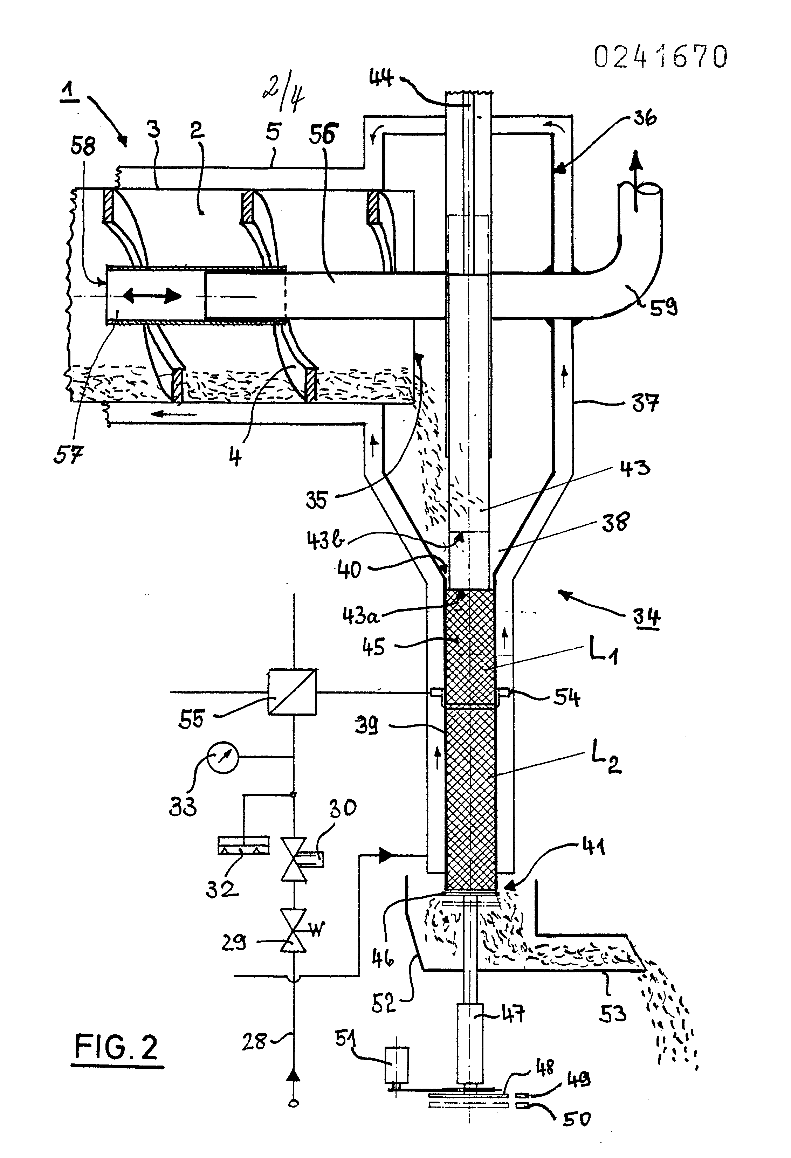

Die Figuren 1 und 2 sind in der Zusammenschau zu sehen. Figur 1 zeigt das linke Ende bzw. die Eintragsseite einer Retorte 1, deren Retortenraum 2 von einem zylindrischen Mantel 3 umgeben ist, an dessen Innenwand eine Förderschnecke 5 befestigt ist. Die Retorte 1 ist von einem Heizmantel 6 umgeben, in den auf hier nicht näher bezeichnete Weise Heizgase eingeleitet werden, durch die die Retorte auf die erforderliche Betriebstemperatur gebracht wird. Die Retorte 1 ist um ihre Längsachse A drehbar.

Die Retorte 1 besitzt in ihrer linken Stirnwand 6 einen konzentrischen Rohrstutzen 7, der über eine nicht dargestellte Drehkupplung mit der Eintragsvorrichtung 8 verbunden ist. Die Eintragsvorrichtung besitzt ein senkrechtes Rohr 9 mit einer Eintrittsöffnung 10 und einer Austrittsöffnung 11. Der Eintrittsöffnung ist ein Einlauftrichter 12 zugeordnet, in den das zu reinigende Gut mittels einer nicht gezeigten Transporteinrichtung eingebracht wird.

Im Bereich der Eintrittsöffnung 10 ist ein in Achsrichtung des Rohres 9 intermittierend bewegbarer Stempel 13 angeordnet, der über eine Schubstange 14 mit einem nicht dargestellten Antrieb verbunden ist. Mittels dieses Antriebs erhält der Stempel 13 einen solchen Hub, daß er in seiner einen Endstellung die Eintrittsöffnung 10 freigibt und bei seinem Eintauchen in das Rohr 9 in diesem einen Pfropfen 15 aus dem zu reinigenden Gut erzeugt. Im Bereich der Austrittsöffnung 11 ist ein in Richtung der Rohrachse verschiebbares Widerlager 16 angeordnet, auf dem sich der Pfropfen 15 abstützt, damit an seinem oberen Ende ein ausreichend großer Preßdruck erzeugt werden kann. Das Widerlager 16 steht unter der Wirkung einer nicht gezeigten, in einem Federgehäuse 17 befindlichen Druckfeder, die entsprechend der maximalen Preßkraft ausgelegt ist. Durch Fortsetzung der Verdichtung am oberen Ende des Pfropfens 15, der sogenannten "Spänesäule", überwindet dieser alsdann die Federkraft und verschiebt das Widerlager 16 in die strichpunktiert dargestellte Position 16a. Dadurch gelangt eine Kontaktscheibe 18 aus dem Bereich eines ersten Kontaktes 19 in den Bereich eines zweiten Kontaktes 20, wodurch ein Antriebsmotor 21 eingeschaltet wird, der das Widerlager 16 in Drehung versetzt. Dieses Widerlager 16 ist als antreibbarer Drehteller ausgebildet, dessen Drehachse 22 parallel zur Rohrachse verläuft, wobei der Rohrquerschnitt in der Projektionsfläche des Drehtellers liegt. Die Anordnung kann dabei koaxial getroffen sein, wie in Figur 1 dargestellt, sie kann jedoch auch einen exzentrischen Versatz aufweisen. Das Widerlager 16 ist auf seiner der Austrittsöffnung 11 zugekehrten Oberfläche 22 mit Zerkleinerungselementen 23 (sogenannten Schikanen)ausgestattet, so daß durch Drehung des Widerlagers 16 die untere Stirnseite des Pfropfens 15 aufgelöst bzw. zerrieben wird. Sobald eine entsprechende

- 15 -

Teillänge des Pfropfens 15 wieder in eine schüttfähige Masse aufgelöst ist, kommt das Widerlager 16 wieder an der Austrittsöffnung 11 des Rohres 9 zur Anlage, und die Kontaktscheibe 18 gelangt aus dem Bereich des zweiten Kontaktes 20 in den Bereich des ersten Kontaktes 19, wodurch der Antriebsmotor 21 wieder stillgesetzt wird. Dieser Vorgang wiederholt sich automatisch und nach Maßgabe der Gutzufuhr in den Einlauftrichter 12 bzw. der Fördermenge des Stempels 13 pro Zeiteinheit. Selbst wenn kein Reinigungsgut mehr in den Einlauftrichter 12 eingefüllt wird, so bleibt der allergrößte Teil des Innenvolumens des Rohres 9 durch die dort verbleibende Spänesäule verschlossen, so daß in Verbindung mit der nachstehend noch näher beschriebenen Gasspülung ein Lufteinbruch in die Retorte ausgeschlossen ist.

Unterhalb des Rohres 9 und auf dem Umfang des Widerlagers 16 ist ein Auffangtrichter 24 angeordnet, von dem ein Förderrohr 25 in das Innere der Retorte 1 führt. Dieses Förderrohr kann beispielsweise eine Förderschnecke aufweisen; es kann aber auch als Vibrationsrinne ausgeführt sein. Der Auffangtrichter 24 sowie der untere Teil des Rohres 9 sind von einem Gehäuse 26 umgeben, das sowohl gegenüber dem Rohr 9 als auch gegenüber der Retorte absolut gasdicht ausgebildet ist und in dem eine Schutzgasatmosphäre mit einem entsprechenden Überdruck aufrechterhalten werden kann.

- 16 -

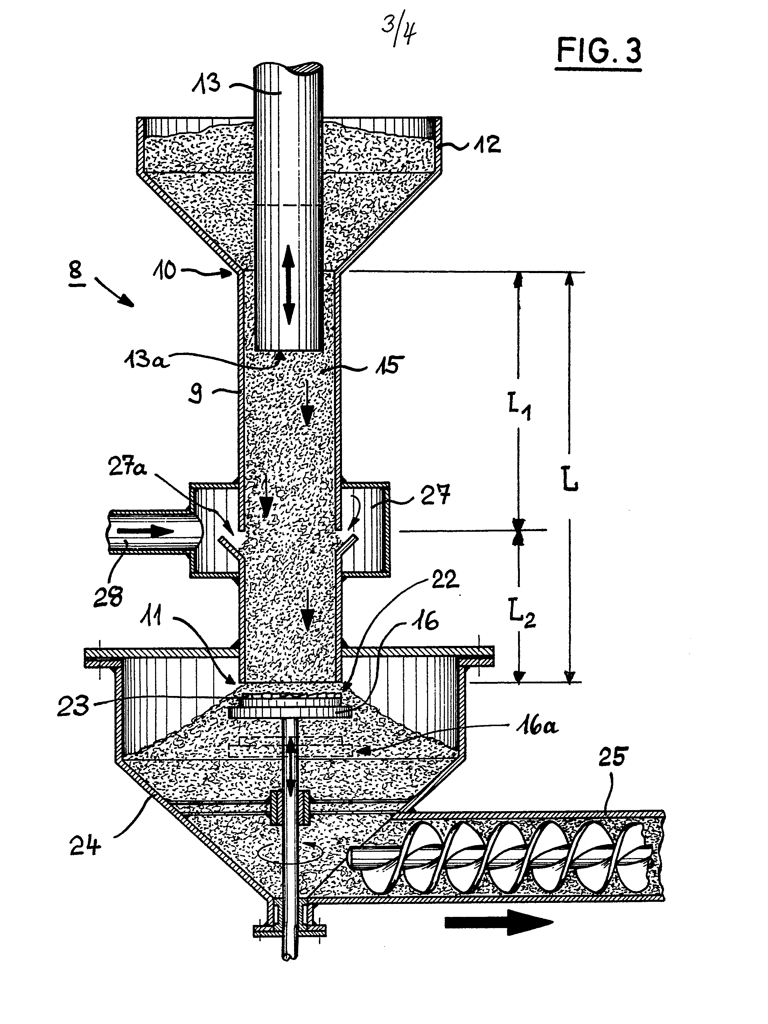

Wie weiterhin aus Figur 1 ersichtlich ist, ist das Rohr 9 zwischen seiner Eintrittsöffnung 10 und seiner Austrittsöffnung 11 mit einer Zuführeinrichtung 27 für ein Schutzgas versehen, das über eine Leitung 28 von einem nicht gezeigten Vorratsbehälter herangeführt wird. Die Zuführeinrichtung 27 mündet über einen ringförmigen Schlitz 27a (Figur 3) in den Innenraum des Rohres 9, und zwar an einer Stelle, durch die das Rohr 9 in eine Teillänge $L_1$ und eine Teillänge $L_2$ unterteilt wird. Die Wahl dieser Teillängen $L_1$ und $L_2$ kann innerhalb der weiter oben beschriebenen Bereiche getroffen werden. Als praktisch brauchbar hat sich für die Teillänge $L_1$ ein Wert von 67 % und für die Teillänge $L_2$ ein Wert von 33 % der Gesamtlänge des Rohres 9 erwiesen. Für die Wahl des Gasdruckes in der Zuführeinrichtung 27 wurden weiter oben bereits Angaben gemacht. Die Steuerung erfolgt über ein Magnetventil 29, ein Druck-Regelventil 30, einen Durchflußmengenmesser 31, eine Gasmangelsicherung 32 und einen Druckmesser 33.

In analoger Weise ist die Austragsvorrichtung 34 auf der rechten Seite der Retorte, der sogenannten Austragsseite aufgebaut. Die hintere offene Stirnseite 35 der Retorte 1 mündet unter Zwischenschaltung nicht gezeigter Drehdichtungen in eine Kammer 36, die ebenso wie die Retorte 1 von einem Heizmantel 37 umgeben ist. (Fig. 2). Das untere Ende der Kammer 36 wird wiederum durch einen Einlauftrichter 38 gebildet, an den sich nach unten hin ein Rohr 39 anschließt, das eine mit dem Rohr 9 in Figur 1 weitgehend übereinstimmende Funktion hat. Auch das Rohr 39 besitzt eine Eintrittsöffnung 40 und eine Austrittsöffnung 41. Im Bereich der Eintrittsöffnung 40 ist gleichfalls ein in Achsrichtung des Rohres intermittierend beweglicher Stempel 43 angeordnet, der eine untere Arbeitsfläche 43a aufweist. Die relative Zuordnung des Stempels 43 zur Eintrittsöffnung 40 erfolgt dabei in der Weise, daß der Stempel 43 in seiner oberen Endstellung die Eintrittsöffnung 40 freigibt (siehe die strichpunktierte Arbeitsfläche 43b) und daß er bei seinem Eintauchen in das Rohr unter der Wirkung der Schubstange 44 in dem Rohr 39 einen Pfropfen 45 aus dem bereits gereinigten Gut erzeugt. Im Bereich der Austrittsöffnung 41 befindet sich auch hier ein in Richtung der Rohrachse verschiebbares Widerlager 46 für den Pfropfen 45, welches in seiner oberen Endstellung in unmittelbarer Nähe der Austrittsöffnung 41 stillsetzbar ist. Sobald in dem Rohr 39 ein Pfropfen 45 von ausreichender Dichte gebildet worden ist, verschiebt er das Widerlager 46 gegen die Kraft einer Feder, die in einem Federgehäuse 47 untergebracht ist. Auch hierbei wird eine Kontaktscheibe 48 aus dem Bereich eines ersten Kontaktes 49 in den Bereich eines zweiten Kontaktes 50 gebracht, durch den ein weiterer Antriebsmotor 51 eingeschaltet wird. Da auch das Widerlager 46 in Analogie zu Figur 1 auf seiner Oberfläche mit Zerkleinerungselementen versehen ist, wird auch hier der Pfropfen 39 an seinem unteren Ende quasi-kontinuierlich wieder in eine schütt-
bzw. rieselfähige Masse umgewandelt, die in einem Auffangtrichter 52 gesammelt und von hier über eine
Förderrinne 53 einem nicht gezeigten Sammelbehälter
zugeführt wird.

Auch das Rohr 39 ist mit einer analog aufgebauten
Zuführeinrichtung 54 für ein Schutzgas ausgestattet, durch deren
Höhenlage der Pfropfen 45 sinngemäß in zwei Teillängen $L_1$ und $L_2$ unterteilt wird, wobei in diesem
Falle jedoch die Teillänge $L_1$ kleiner ist als die
Teillänge $L_2$. Während einleitend für die Dimensionierung
dieser Teillängen allgemeinere Grundsätze angegeben
sind, hat es sich bei Versuchen als besonders zweckmäßig erwiesen, die Teillänge $L_1$ zu 33 % und die Teillänge $L_2$ zu 67 % der Gesamtlänge des Rohres 39 zu
wählen.

Für die Steuerung und Überwachung der Schutzgaszufuhr
über die Leitung 28 werden ähnliche Einrichtungen
wie in Figur 1 verwendet, so daß auf die dort gewählten
Bezugszeichen zurückgegriffen wird. Zusätzlich ist
für die Vorwärmung des Schutzgases jedoch noch ein
Wärmetauscher 55 vorgesehen, der auf der Eingangsseite mit Abgasen aus der Retortenheizung versorgt wird.

Figur 3 zeigt Einzelheiten der Eintragsvorrichtung 8
nach Figur 1 in größerer Deutlichkeit und unter
Verwendung gleicher Bezugszeichen, so daß sich
Wiederholungen erübrigen dürften.

- 19 -

In Figur 2 ist noch gezeigt, daß in das rechte Ende der Retorte 1 ein Abzugsrohr 56 hineinragt, dessen teleskopartig aufgesetztes Ende 57 in axialer Richtung (Doppelpfeil) verschiebbar ist. Dadurch ist es möglich, dessen Ansaugöffnung 58 in der Retorte 1 in eine solche axiale Position zu bringen, die dem Prozeßablauf optimal angepaßt ist. Der ortsfeste Teil des Abzugsrohres 56 ist in die Seitenwand der Kammer 36 dicht eingeschweißt.

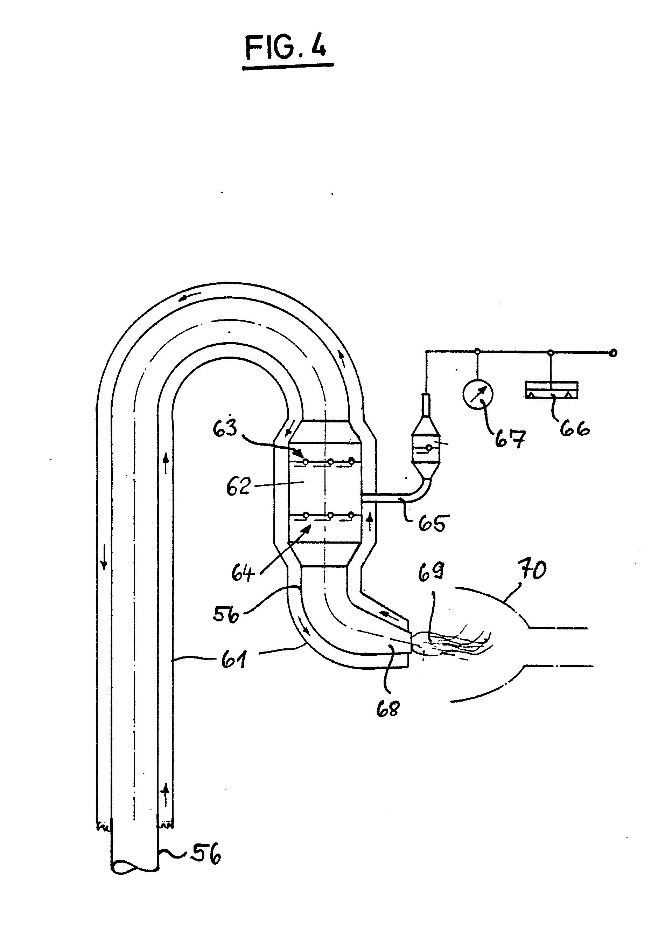

Das Abzugsröhr 56 besitzt einen Krümmer 59, über den es in einen vertikalen Teil übergeht, dessen weiterer Verlauf anhand von Figur 4 näher erläutert ist.

In dem Abzugsrohr 56, das gemäß Figur 4 gleichfalls mit einem Heizmantel 61 umgeben ist, befinden sich in einer Ventilkammer 62 in Strömungsrichtung gesehen hintereinander zwei Gruppen von Rückschlagventilen 63 und 64, zwischen denen eine Zuführleitung 65 für ein Schutzgas in das Abzugsrohr 56 einmündet. Die in Strömungsrichtung gesehen zweite Gruppe von Rückschlagventilen 64 ist auf einen niedrigeren Öffnungsdruck eingestellt als die erste Gruppe von Rückschlagventilen 63. Auch dadurch wird erreicht, daß unter keinen Umständen Luft, und auch kein Schutzgas in die Retorte eintreten kann. Die Rückschlagventile 63 und 64 sind als Kugelventile ausgebildet, da diese einen besonders sicheren Verschluß gewährleisten. Die Versorgung der Ventilkammer 62 mit Schutzgas über die Zuführleitung 65 geschieht gleichfalls unter Verwendung einer Gasmangelsicherung 66 und eines Druckmeßgerätes 67, wobei jedoch auch noch weitere Steuergeräte gemäß Figur 1 vorgeschaltet werden können.

Das Abzugsrohr 56 mündet jenseits der Ventilkammer 62 in eine Brennerdüse 68, in der das Pyrolysegas mittels einer Flamme 69 verbrannt wird, deren Energie beispielhaft zur Beheizung der Retorte verwendet werden kann. Die Verbrennungsgase werden über einen Kamin 70 einer Nachverbrennung oder dem Retortenbrenner zugeführt.

Die Ringspalte zwischen den Preßstempeln 13 bzw. 43 und den Rohren 9 bzw. 39 sind nicht kritisch. Einerseits soll schon wegen der Beschaffenheit des Guts (Späne) keine enge Passung wie bei einem Kolben vorliegen, andererseits soll eine ausreichende Versichtung zu einem Pfropfen möglich sein, ohne daß das Gut nach oben ausweicht. Es hat sich daher als zweckmäßig erwiesen, den Ringspalten eine Weite von wenigen Millimetern zu geben, so daß auch kein merklicher Verschleiß an dieser Stelle auftritt.

Die Rohre 9 bzw. 39 sollten einen gewissen Schlankheitsgrad aufweisen, damit die Pfropfen 15 bzw. 45 eine ausreichende Sperrwirkung erzeugen. Zweckmässig sollte das Verhältnis von Rohrlänge L zu seinem Innendurchmesser $D_i$ mindestens 4 : 1, vorzugsweise etwa 6 : 1 betragen, und der Hub der Stempel 13 bzw. 43 sollte klein sein im Verhältnis zur Rohrlänge L, damit die Pfropfen aus möglichst vielen Einzelportionen aufgebaut werden. Durch einen anteiligen Hub von z.B. 60 mm läßt sich in der Regel eine gute Verdichtung der "Spänesäule" erreichen, wobei es sich um den Teil des Hubes handelt, der innerhalb des Rohres liegt.

Beispiel :

10.000 kg gebrochene Drehspäne aus Messing mit einem mittleren Querschnitt von 0,5 mm$^2$ und einer mittleren Länge von 10 mm, d.h., mit einer relativ guten Schüttfähigkeit, einem Ölanteil von 3,9 % und einem Wasseranteil von 0,1 % wurden in einer Zeitspanne von 60 min. der vorstehend beschriebenen Vorrichtung zugeführt, bei der die Retorte eine Länge von 1500 cm bei einem Durchmesser von 145 cm aufwies. Die Rohrlänge L betrug sowohl in der Eintrags- als auch in der Austragsvorrichtung jeweils 210 cm bei einem lichten Rohrdurchmesser $D_i$ von jeweils 36 cm. Der Durchmesser der Stempel 13 bzw. 43 betrug 30 cm, so daß ein Ringspalt von 30 mm um die Stempel herum frei blieb. Der Kolbenhub betrug 35 cm, wovon 6 cm innerhalb der Rohre und 29 cm innerhalb der Einlauftrichter lagen.

Die beiden Stempel wurden mit einer Frequenz von 15 Hüben pro Minute betrieben, und der Einlauftrichter der Eintragsvorrichtung wurde jeweils von Hand rechtzeitig nachgefüllt, bevor die im Einlauftrichter befindlichen Späne verbraucht waren. Die maximale Preßkraft betrug 30.150 kN, der Preßdruck mithin 29,62 kN/cm$^2$ Projektionsfläche der Stempel. Die Späne ließen sich auf diese Weise zu einem Pfropfen mit einer mittleren Dichte von 1,82 g/cm$^3$ verdichten.

Unter der Rohrmündung befand sich in konzentrischer Anordnung ein Drehteller mit einem Außendurchmesser von 38 cm. Die Oberfläche des Drehtellers war mit Schikanen versehen, und der Drehteller rotierte mit einer Drehzahl von 30 min$^{-1}$, gegenüber der Austrittsöffnung des Rohres. Am Rande des Drehtellers aufgefangene Späne zeigten, daß sich diese erneut in einer gut schütt- bzw. rieselfähigen Konsistenz befanden und ohne weiteres durch die Retorte transportiert wurden.

Während der gesamten Betriebsdauer wurde das Rohr 9 der Eintragsvorrichtung mit einer Menge von 20 Nm$^3$/h Stickstoff von Raumtemperatur beaufschlagt.

Die Wandtemperatur der Retorte betrug maximal 450 C, ihre Drehzahl 3 min$^{-1}$, so daß die Verweilszeit der Späne in der Retorte bei einer Steigung der Schnecke von 20 cm etwa 24 min. betrug.

Auf der Austragsseite lagen im wesentlichen die gleichen Verhältnisse wie auf der Eintragsseite vor. Die hinter der Austragsseite abgenommenen Späne waren von einwandfreier Beschaffenheit und besaßen eine Restfeuchte von etwa 0,15 %. Durch einen Gewichtsvergleich der ausgetragenen Spänemenge mit der eingetragenen Spänemenge ergab sich der oben angegebene Ölgehalt von 3,9 % und der Wassergehalt von 0,1 %.

Durch die hohe mittlere Betriebstemperatur von 420 C ergab sich die relativ kurze Verweilszeit von nur 24 min.

- 23 -

A N S P R Ü C H E :

1. Verfahren zum Entfernen von schwer verdampfbaren Kohlenwasserstoffen aus feinstückigem Gut, insbesondere zum Reinigen von Schneidöl enthaltenden Metallspänen, durch indirekte Erwärmung des Gutes unter Sauerstoffabschluß in einer vom Gut kontinuierlich durchlaufenden Retorte, in die das Gut durch eine mit Schutzgas versorgte Eintragsvorrichtung eingebracht und aus der es durch eine mit Schutzgas versorgte Austragsvorrichtung wieder ausgebracht wird, dadurch gekennzeichnet, daß das Gut in der Eintragsvorrichtung in einem Rohr durch einen intermittierend wirkenden Stempel in axialer Richtung zu einem gasdurchlässigen, das Rohr weitgehend ausfüllenden Pfropfen verdichtet wird und daß der Pfropfen nach Verlassen des Rohres und vor dem Eintritt des Gutes in die Retorte wieder in einen fließfähigen Stoffstrom umgewandelt wird.

2. Verfahren nach Anspruch 1, dadurch gekennzeichnet, daß das Gut in der Austragsvorrichtung in einem Rohr durch einen intermittierend wirkenden Stempel in axialer Richtung zu einem gasdurchlässigen, das Rohr weitgehend ausfüllenden Pfropfen verdichtet wird und daß der Pfropfen nach Verlassen des Rohres und vor dem Eintritt des Guts in einen Schmelzofen wieder in einen fließfähigen Stoffstrom umgewandelt wird.

3. Verfahren nach Anspruch 1, dadurch gekennzeichnet, daß das Rohr der Eintragsvorrichtung an einer solchen Stelle mit Schutzgas versorgt wird, daß der Weg eines Teilstroms des Schutzgases bis zur Eintrittsseite des Rohres 50 bis 75 % der Gesamtlänge und der Weg des anderen Teilstroms des Schutzgas bis zur Austrittsseite des Rohres 25 bis 50 % der Gesamtlänge des Rohres beträgt.

4. Verfahren nach Anspruch 1, dadurch gekennzeichnet, daß das Rohr der Austragsvorrichtung an einer solchen Stelle mit Schutzgas versorgt wird, daß der Weg eines Teilstroms des Schutzgases bis zur Eintrittsseite des Rohres 25 bis 50 % der Gesamtlänge und der Weg des anderen Teilstroms des Schutzgases bis zur Austrittsseite des Rohres 50 bis 75 % der Gesamtlänge des Rohres beträgt.

5. Verfahren nach Anspruch 1, dadurch gekennzeichnet, daß das Schutzgas vor der Einführung in die Austragsvorrichtung auf mindestens 200 C vorgewärmt wird.

6. Verfahren nach Anspruch 1, dadurch gekennzeichnet, daß das feinstückige Gut beim Reinigungsprozeß auf Temperaturen oberhalb 250 °C aufgeheizt wird.

7. Verfahren nach Anspruch 1, dadurch gekennzeichnet, daß der Gasdruck $P_R$ in der Retorte oberhalb des atmosphärischen Drucks $P_{at}$ und die Zufuhrdrücke für das Schutzgas in die Eintragsvorrichtung $P_E$ bzw. in die Austragsvorrichtung $P_A$ oberhalb des Retortendrucks $P_R$ gehalten werden. ($P_{at} \leqslant P_R \leqslant P_E, P_A$).

8. Vorrichtung zur Durchführung des Verfahrens nach Anspruch 1, mit einer von außen beheizbaren Retorte, der in jeweils gasdichter Verbindung eine Eintragsvorrichtung vorgeschaltet und eine Austragsvorrichtung nachgeschaltet ist und die eine Fördereinrichtung für den kontinuierlichen Transport des Guts von der Eintrags- zur Austragsvorrichtung aufweist, dadurch gekennzeichnet, daß die Eintragsvorrichtung (8) ein Rohr (9) mit einer Eintrittsöffnung (10) und einer Austrittsöffnung (11) aufweist, daß im Bereich der Eintrittsöffnung ein in Achsrichtung des Rohres intermittierend bewegbarer Stempel (13) angeordnet ist, derart, daß er in seiner einen Endstellung die Eintrittsöffnung (10) freigibt und bei seinem Eintauchen in das Rohr (9) in diesem einen Pfropfen (15) aus dem Gut erzeugt, und daß im Bereich der Austrittsöffnung (11) ein in Richtung der Rohrachse verschiebbares Widerlager (16) für den Pfropfen (15) angeordnet ist, das in seiner einen Endstellung in der Nähe der Austrittsöffnung während des Verdichtungshubes des Stempels stillsetzbar ist und das außerhalb dieser Endstellung eine Zerkleinerungsvorrichtung für den Pfropfen (15) ist.

9. Vorrichtung nach Anspruch 8, dadurch gekennzeichnet, daß die Austragsvorrichtung (34) ein Rohr (39) mit einer Eintrittsöffnung (40) und einer Austrittsöffnung (41) aufweist, und daß im Bereich der Eintrittsöffnung ein in Achsrichtung des Rohres intermittierend beweglicher Stempel (43) angeordnet ist, derart, daß er in seiner einen Endstellung die Eintrittsöffnung (40) freigibt und bei seinem Eintauchen in das Rohr (39) in diesem

- 26 -

einen Pfropfen (45) aus dem Gut erzeugt, und daß im Bereich der Austrittsöffnung (41) ein in Richtung der Rohrachse verschiebbares Widerlager (46) für den Pfropfen (45) angeordnet ist, das in seiner einen Endstellung in der Nähe der Austrittsöffnung während des Verdichtungshubes des Stempels stillsetzbar ist und das außerhalb dieser Endstellung eine Zerkleinerungsvorrichtung für den Pfropfen (45 ) ist.

10. Vorrichtung nach Anspruch 8 oder 9, dadurch gekennzeichnet, daß die Eintrittsöffnung (10, 40) an einen Einlauftrichter (12, 38) angeschlossen ist, und daß der Stempel (13, 43) mit seiner Arbeitsfläche (13a, 43a) in den erweiterten Teil des Einlauftrichters zurückziehbar ist.

11. Vorrichtung nach Anspruch 8 oder 9, dadurch gekennzeichnet, daß das Widerlager (16, 46) für den Pfropfen (15, 45) als antreibbarer Drehteller ausgebildet ist, dessen Drehachse (22) parallel zur Rohrachse verläuft, wobei der Rohrquerschnitt in der Projektionsfläche des Drehtellers liegt.

12. Vorrichtung nach Anspruch 11, dadurch gekennzeichnet, daß das als Drehteller ausgebildete Widerlager (16, 46) auf seiner der Austrittsöffnung (11, 41) zugekehrten Oberfläche (22) Zerkleinerungselemente (23) für die Auflösung des Pfropfens (15, 45) aufweist.

13. Vorrichtung nach Anspruch 12 , dadurch gekennzeichnet, daß das Widerlager ( 16, 46 ) zum Zwecke der abschnittweisen Auflösung des Pfropfens (15 , 45 ) während der Drehbewegung aus seiner Tiefststellung kontinuierlich gegen die Austrittsöffnung verschiebbar ist.

14. Vorrichtung nach Anspruch 8 oder 9, dadurch gekennzeichnet, daß das Rohr ( 9 , 39 ) zwischen seiner Eintritts- (10 , 40 ) und seiner Austrittsöffnung (11, 41) mit einer Zuführeinrichtung ( 27, 54 ) für ein Schutzgas versehen ist.

15. Vorrichtung nach Anspruch 14 , dadurch gekennzeichnet, daß die Zuführeinrichtung (27 ) bei der Eintragsvorrichtung ( 8 ), in Transportrichtung gesehen, 50 bis 75 % der Rohrlänge hinter der Eintrittsöffnung ( 11) angeordnet ist.

16. Vorrichtung nach Anspruch 14 , dadurch gekennzeichnet, daß die Zuführeinrichtung (54 ) bei der Austragsvorrichtung ( 34, in Transportrichtung gesehen, 25 bis 50 % der Rohrlänge hinter der Eintrittsöffnung (40 ) angeordnet ist.

17. Vorrichtung nach Anspruch 8, dadurch gekennzeichnet, daß die Retorte ( 1) mit einem Abzugsrohr (56) für die Kohlenwasserstoffdämpfe versehen ist und daß in diesem Abzugsrohr (56) in Strömungsrichtung hintereinander zwei Gruppen von Rückschlagventilen (63, 64) angeordnet sind, zwischen denen eine Zuführleitung (65) für ein Schutzgas in das Abzugsrohr (56) einmündet.

- 28 -

18. Vorrichtung nach Anspruch 17 , dadurch gekennzeichnet, daß die in Strömungsrichtung gesehen zweite Gruppe von Rückschlagventilen (64) auf einen niedrigeren Öffnungsdruck eingestellt ist als die erste Gruppe von Rückschlagventilen (63).

19. Vorrichtung nach Anspruch 17, dadurch gekennzeichnet, daß das Abzugsrohr (56) in der Weise längsverschiebbar in der Retorte (1) gelagert ist, daß seine Ansaugöffnung (58) in eine dem Prozeßverlauf angepaßte Absaugposition bringbar ist.

20. Vorrichtung nach Anspruch 17, dadurch gekennzeichnet, daß die Rückschlagventile (63,64) in einer Ventilkammer (62) untergabracht sind, deren Bauteile sämtlich auf einer Temperatur oberhalb von 250 C haltbar sind.

21. Vorrichtung nach Anspruch 17, dadurch gekennzeichnet, daß die Rückschlagventile (63,64) als Kugelventile ausgebildet sind.

22. Vorrichtung nach Anspruch 1, dadurch gekennzeichnet, daß das Verhältnis von Rohrlänge L zum Innendurchmesser $D_i$ der Rohre (9 bzw. 39) mindestens 4 : 1, vorzugsweise etwa 6 : 1 beträgt.

23. Vorrichtung nach Anspruch 22, dadurch gekennzeichnet, daß der Hub H der Preßstempel (13 bzw. 43) klein ist im Verhältnis zur Rohrlänge L.

1/4

0241670

FIG.1

FIG.2

# FIG. 3

# FIG. 4

# EUROPÄISCHER RECHERCHENBERICHT

**Europäisches Patentamt**

## EINSCHLÄGIGE DOKUMENTE

EP 87102172.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE - A1 -3 315 557 (DR. BÖING)  <br> * Seite 21, Zeile 17 - Seite 22, Zeile 14; Anspruch 1 *  <br> -- | 1,8 | C 23 G 3/00  <br> C 23 G 5/00  <br> B 08 B 7/00 |
| Y | DE - C - 912 167 (SCHULTZ)  <br> * Ansprüche 1,4 *  <br> -- | 1,8 | |
| A | US - A - 4 569 696 (SANDSTROM)  <br> * Spalte 4, Zeilen 11-41 *  <br> -- | 1,8 | |
| A | US - A - 4 548 651 (RAMSEY)  <br> * Anspruch 1 *  <br> ---- | 1,8 | |

**RECHERCHIERTE SACHGEBIETE (Int. Cl 4)**

C 23 G

B 08 B

Der vorliegende Recherchenbericht wurde für alle Patentansprüche erstellt.

| Recherchenort | Abschlußdatum der Recherche | Prüfer |
|---|---|---|
| WIEN | 06-08-1987 | WILFLINGER |